# DEMANDE DE BREVET EUROPEEN

(11) **EP 1 317 059 A1**
(43) Date de publication de la demande: **04.06.2003**
(21) Numéro de dépôt: 02292920.2
(22) Date de dépôt: 26.11.2002
(51) Int. Cl.: H02P 9/30

(54) **Dispositif de régulation d'un réseau électrique, notamment de véhicle automobile**

(30) Priorité: 30.11.2001 FR 0115553
(71) Demandeur: VALEO EQUIPEMENTS ELECTRIQUES MOTEUR, 94017 Creteil (FR)
(72) Inventeur: Pierret, Jean-Marie, 75012 Paris (FR)
(74) Mandataire: Gamonal, Didier

(57) **Abrégé**

L'invention concerne un dispositif de régulation d'un réseau électrique, notamment de véhicule automobile, ce réseau fonctionnant sous une première tension nominale et comprenant un interrupteur à clé de contact (13), un alternateur (20) délivrant au moins des premier et deuxième courants de phases (241) et (242) équipé d'un redresseur (21) des courants de phases, et une batterie (10).

Selon l'invention, le dispositif de régulation (32) comprend un régulateur (12) adapté à une seconde tension nominale prédéterminée inférieure à la première tension nominale du réseau, et un dispositif d'adaptation (30) convertissant les valeurs des signaux du réseau en valeurs adaptées au régulateur (12).

## Description

L'invention concerne un dispositif de régulation d'un réseau électrique, notamment de véhicule automobile, ce réseau fonctionnant sous une première tension nominale et comprenant un interrupteur à clé de contact, un alternateur dont les bobinages induits délivrent au moins des premier et deuxième courants de phases et équipé d'un redresseur des courants de phases, et une batterie.

Il est connu d'utiliser dans un véhicule automobile des dispositifs de régulation adaptés aux tensions nominales du réseau électrique du véhicule, qui peut être 14, 28 ou 42 Volts suivant les modèles. Ces régulateurs de tension se présentent sous la forme de circuits intégrés monolithiques, dédiés à un réseau d'une tension donnée unique. Les régulateurs de tension des réseaux sous 14 Volts ne peuvent donc pas être employés sur des réseaux sous 28 ou 42 Volts.

Cette situation présente l'inconvénient que la gamme de régulateur à développer et à mettre en oeuvre est large, ces régulateurs étant d'autant plus coûteux que la tension de fonctionnement est élevé.

Dans ce contexte, la présente invention a pour but de pallier les inconvénients cités ci-dessus.

A cette fin, l'invention, par ailleurs conforme à la définition générique qu'en donne le préambule ci-dessus, est essentiellement caractérisée en ce que le dispositif de régulation comprend un régulateur adapté à une seconde tension nominale prédéterminée inférieure à la première tension nominale du réseau, et un dispositif d'adaptation convertissant les valeurs des signaux du réseau en valeurs adaptées au régulateur.

Dans un mode de réalisation possible de l'invention, le dispositif d'adaptation comprend un détecteur de fonctionnement de l'alternateur muni de moyens pour comparer les potentiels de sortie des premier et deuxième bobinages de phases, les diviser d'un premier rapport prédéterminé et les transmettre au régulateur.

De préférence, le dispositif d'adaptation comprend un circuit de mise sous tension muni de moyens pour transmettre la tension du réseau vers le régulateur quand l'interrupteur à clé de contact est fermé ou sur un signal du détecteur de fonctionnement de l'alternateur.

Par exemple, le dispositif d'adaptation comprend un diviseur de tension muni de moyens pour diviser du dit premier rapport prédéterminé la tension transmise par le circuit de mise sous tension vers le régulateur.

Avantageusement, le dispositif d'adaptation comprend un circuit d'excitation muni de moyens pour recevoir un signal d'excitation du régulateur, l'amplifier d'un second rapport prédéterminé et le transmettre à l'alternateur.

De préférence, le détecteur de fonctionnement de l'alternateur transmet ledit signal au circuit de mise sous tension quand la différence des potentiels de sortie des premier et deuxième bobinages de phases et dépasse 0,5 Volt en valeur absolue.

Par exemple, ledit premier rapport prédéterminé est égal au rapport entre les seconde et première tensions nominales.

De préférence, ledit second rapport prédéterminé est égal au rapport entre les première et seconde tensions nominales.

Avantageusement, la dite tension du réseau transmise par le circuit de mise sous tension vers le régulateur est mesurée à la sortie du redresseur.

Par exemple, un potentiel de masse est mesuré en sortie de l'alternateur et transmis au régulateur, au détecteur de fonctionnement de l'alternateur et au diviseur de tension.

Par exemple, la première tension nominale est égale à 28 Volts ou 42 Volts.

Avantageusement, la seconde tension nominale est égale à 14 Volts.

D'autres caractéristiques et avantages de l'invention ressortiront clairement de la description qui en est donné ci-dessous, à titre indicatif et nullement limitatif, en références aux figures annexées, dans lesquelles :
- la figure 1 représente l'architecture générale d'un réseau électrique selon l'invention,
- la figure 2 représente l'architecture générale du dispositif d'adaptation du réseau de la figure 1, et
- la figure 3 représente l'architecture détaillée du dispositif d'adaptation de la figure 2.

L'invention sera décrite à titre d'exemple dans son application à un réseau électrique de véhicule automobile comprenant une batterie 10, un dispositif de régulation 32 de la tension du réseau équipé d'entrées et de sorties, un interrupteur à clé de contact 13 placé sur une liaison 14 entre la batterie 10 et le dispositif de régulation 32, et un alternateur 20 polyphasé équipé d'un redresseur de courant 21.

De manière connue, l'alternateur 20 comprend un inducteur 22 et un induit 24, l'induit 24 délivrant ici des premier, deuxième et troisième courants de phases sinusoïdaux. Pour plus de précisions on se reportera par exemple au document FR A 2 676 873. Ainsi l'induit 24 consiste, de manière connue, en un stator comportant un corps de stator, sous la forme d'un paquet de tôles rainurées, portant des enroulements de phases reliés au redresseur 21 et délivrant les courants des phases.

Ces premier, deuxième et troisième courants de phases des enroulements des phases sont transformés en courant continu ou pseudo-continu de tension nominale T par le redresseur 21, comportant par exemple des diodes ou des transistors de puissance.

L'inducteur 22 consiste en un rotor généralement à griffes comportant deux roues polaires et un bobinage inducteur, dit aussi bobinage ou enroulement d'excitation, placé entre les roues polaires et relié au régulateur de tension 32. Le stator entoure le rotor solidaire d'un arbre portant à son extrémité avant une poulie reliée par un dispositif de transmission à courroie (s) au moteur thermique du véhicule automobile. Un support en deux parties ajourées, appelées paliers, porte à sa périphérie externe le stator et centralement l'arbre du rotor. Généralement l'alternateur est compact en sorte que le rotor porte au moins à l'une de ses extrémités un ventilateur interne et que le palier arrière du support (celui disposé du côté opposé à la poulie) porte le redresseur 21 et le régulateur de tension 32. Les extrémités du bobinage d'excitation sont reliées à des bagues collectrices portées par l'extrémité arrière de l'arbre du rotor. Des balais, portés par un porte-balais solidaire du palier arrière, coopèrent avec les bagues collectrices pour liaison électrique avec le régulateur de tension 32. En variante, de manière connue, le régulateur 32 et le redresseur 21 sont déportés par rapport à l'alternateur 20.

Dans le mode de réalisation de l'invention décrit ici, le réseau électrique de bord du véhicule fonctionne sous une première tension nominale T de 42 Volts.

Le redresseur 21 alimente la batterie 10 par la liaison B+A.

Le dispositif de régulation 32 module l'intensité du courant passant dans l'inducteur 22, plus précisément dans le bobinage inducteur de celui-ci, de façon à maintenir la tension du réseau à sa valeur nominale.

Selon l'invention, le dispositif de régulation 32 comprend un régulateur classique 12, par exemple du type de celui décrit dans le document EP A 0 561 707 auquel on se reportera pour plus de précisions, adapté à un réseau fonctionnant sous une seconde tension nominale T' égale à 14 Volts, et un dispositif d'adaptation 30 convertissant le potentiel des entrées et des sorties du dispositif de régulation 12 de façon proportionnelle, c'est à dire en divisant par 3 le potentiel des entrées et en multipliant par 3 le potentiel des sorties.

Ce régulateur 12 fonctionne exactement comme dans un réseau sous 14 Volts, sans modification de ses entrées ou de ses réglages.

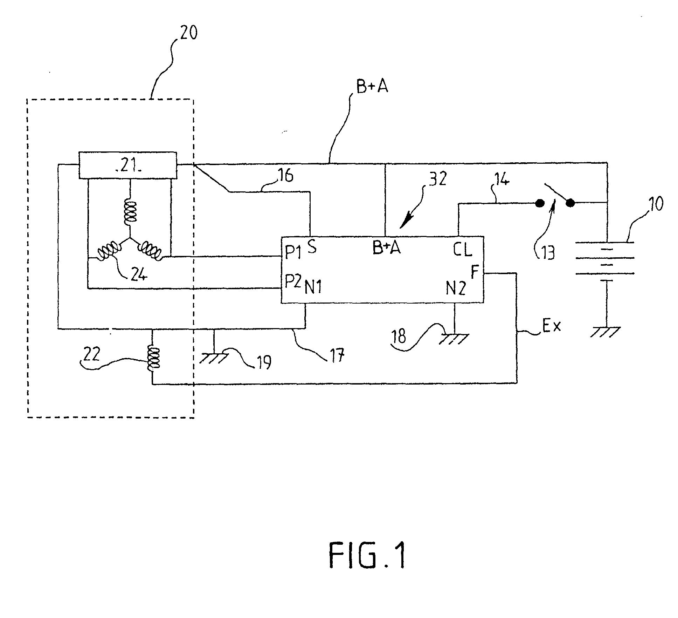

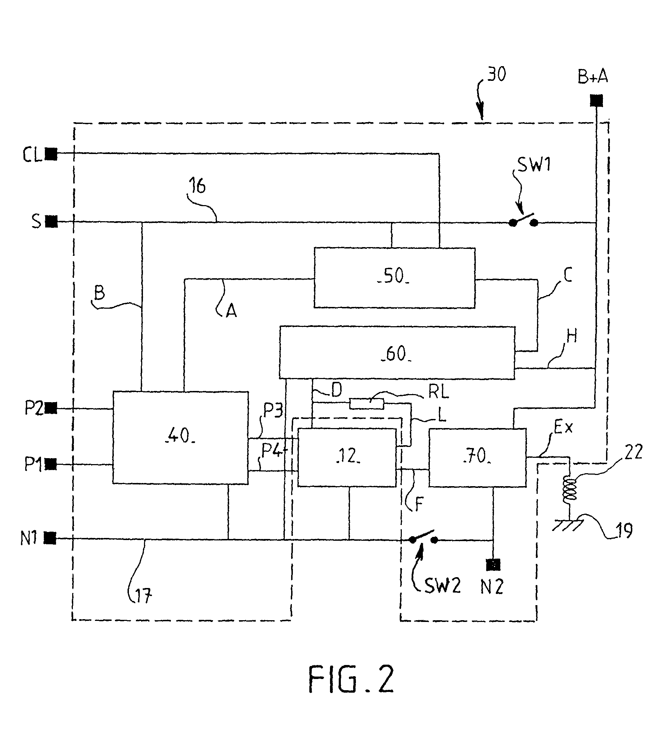

Comme on peut le voir sur la figure 1, le dispositif de régulation 32, constitué par le dispositif d'adaptation 30 et par le régulateur 12 de la figure 2, possède les mêmes entrées et les mêmes sorties qu'un régulateur classique.

Ces entrées sont : des bornes P1, P2 de réception des potentiels des premier et second courants de phases, une borne B + A de réception du potentiel de sortie du redresseur 21, une borne S de réception du potentiel mesuré en un point précis du réseau et transmis par une liaison, dite liaison sense 16, des bornes de réception N1 et N2 du potentiel de la masse en 18, 19 et une borne CL reliée par une ligne 14 à l'interrupteur à clé de contact 13.

Cet ensemble possède également une sortie F, par une liaison Ex, qui est le signal d'excitation de l'inducteur 22.

Comme le montre la figure 2, le dispositif d'adaptation 30 comprend plusieurs modules 40, 50, 60, 70.

Plus précisément un premier module sous la forme d'un détecteur de fonctionnement de l'alternateur 40 compare les potentiels de sortie des premier et deuxième bobinages de phases P1, P2 pour déterminer si l'alternateur 20 est en fonctionnement. Si l'écart entre ces potentiels dépasse une valeur prédéterminée en valeur absolue, un signal est transmis à un circuit de mise sous tension 50 par une liaison A. Cette valeur prédéterminée est de préférence supérieure 0,5 Volts, et peut être fixée par exemple à 0,8 Volts.

Une autre fonction du détecteur 40 est de diviser les potentiels de sortie des premier et deuxième bobinages de phase par un facteur 3 et de les transmettre au régulateur 12 par les liaisons respectives P3 et P4. Les potentiels de crête des sorties des premier et deuxième bobinages de phases sont de cette façon ramenés à des valeurs normales pour le régulateur 12.

Le détecteur 40 est par ailleurs relié à la borne S par une liaison B et à la borne de masse N1.

Le circuit de mise sous tension 50 transmet la tension du réseau mesurée par la liaison sense 16 vers le régulateur 12 quand l'interrupteur à clé de contact 13 est fermé ou sur le signal du détecteur de signaux de fonctionnement de l'alternateur 20.

Cette transmission du circuit de mise sous tension 50 vers le régulateur 12 se fait par la liaison C.

Un diviseur de tension 60 divise la tension transmise par le circuit de mise sous tension 50 vers le régulateur 12 par un facteur 3, faisant passer sa valeur nominale de 42 Volts à 14 Volts.

Le diviseur de tension 60 reçoit la tension à diviser par la liaison C et la transmet après division par la liaison D au régulateur 12. Le diviseur de tension 60 est par ailleurs relié à la borne B+A par la liaison H et à la borne de masse N1.

Le régulateur 12 est un régulateur classique, par exemple adapté à un réseau fonctionnant sous 14 Volts. Une sortie de signalisation L de ce régulateur 12 alimente soit un témoin de charge, comme une lampe ou une diode électroluminescente, soit une résistance RL reliée à un calculateur. C'est cette variante de réalisation qui est représentée sur la figure 2. Le régulateur 12 est relié à la borne de masse N1.

Un circuit d'excitation 70 reçoit un signal d'excitation par une liaison F nominalement sous 14 Volts du régulateur 12, l'amplifie d'un facteur 3 et le transmet par la liaison Ex à l'inducteur 22 de l'alternateur 20.

Le circuit d'excitation 70 est par ailleurs relié à la borne de masse N2 et à la borne B+A.

Il est à noter que la liaison sense 16 comprend un commutateur SW1 monté entre les bornes S et B+A et recueille la tension du réseau directement sur la liaison B+A, en sortie du redresseur 21 quand le commutateur SW1 est fermé.

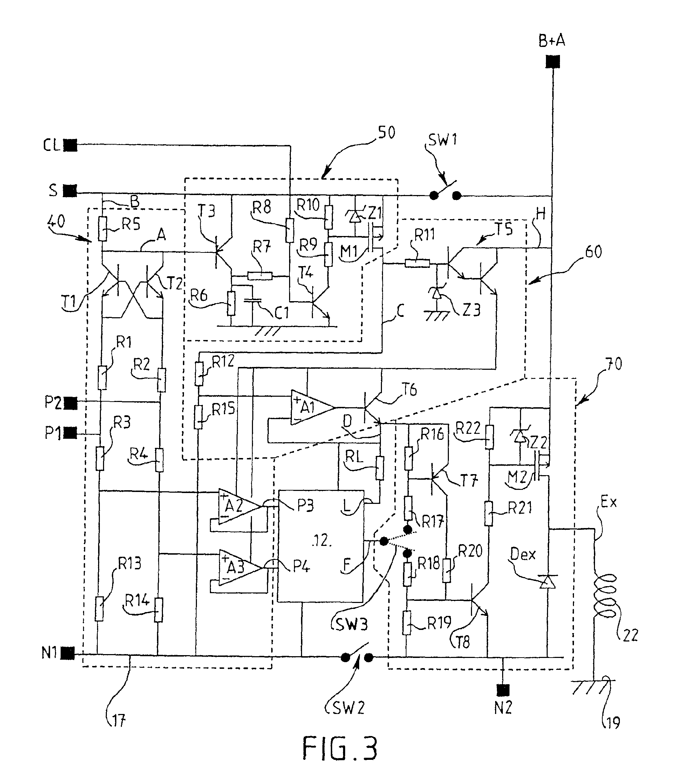

La liaison sense 16 comprend également une autre branche non représentée sur les figures 1 à 3 reliée à la batterie 10, permettant de recueillir la tension du réseau en entrée de batterie 10 quand le commutateur SW1 est ouvert.

Le potentiel de masse est mesuré en un point 19 précis du réseau, ici en sortie de l'alternateur 20, et transmis par un circuit dit "masse commande" 17 à la borne N1 reliée à la fois au détecteur de fonctionnement de l'alternateur 40, au diviseur de tension 60 et au régulateur 12. Ceci est particulièrement avantageux quand le dispositif d'adaptation 30 est situé dans un boîtier différent de l'alternateur 20, le potentiel de masse de ce boîtier pouvant être perturbé par les résistances de câblage.

Si le circuit de masse commande n'est pas utilisé, un commutateur SW2 permet de transmettre le potentiel de masse de la borne N2 mesuré au point 18 au détecteur de fonctionnement de l'alternateur 40, au diviseur de tension 60 et au dispositif de régulation 12. Le potentiel mesuré au point 18 est celui de la masse du dispositif d'adaptation 30.

On va maintenant décrire en détail la structure de chacun des modules annoncés ci-dessus.

Le détecteur de fonctionnement de l'alternateur 40 comprend des transistors bipolaires NPN T1 et T2, des résistances R1 R2, R3, R4, R5, R13 et R14, et des amplificateurs opérationnels A2 et A3.

La borne P1 correspondant au premier bobinage de phases est reliée à une liaison joignant une borne de la résistance R1 et une borne de la résistance R3. L'autre borne de la résistance R1 est reliée à la fois à l'émetteur du transistor T1 et à la base du transistor T2.

La borne P2 correspondant au deuxième bobinage de phases est reliée à une liaison joignant une borne de la résistance R2 et une borne de la résistance R4. L'autre borne de la résistance R2 est reliée à la fois à l'émetteur du transistor T2 et à la base du transistor T1.

La liaison A part d'une borne de la résistance R5 qu'elle relie au collecteur du transistor T1, puis joint celui-ci au collecteur du transistor T2 et enfin constitue la sortie du détecteur de signaux de phases 40 vers le circuit de mise sous tension 50.

La borne opposée de la résistance R5 est reliée à la borne S par la liaison B.

La résistance R3 est reliée par sa borne opposée à la fois à la borne d'entrée non inverseuse de l'amplificateur opérationnel A2 et à une borne de la résistance R13.

Une borne opposée de la résistance R13 est reliée à la borne de masse N1.

La résistance R4 est reliée par sa borne opposée à la fois à la borne d'entrée non inverseuse de l'amplificateur opérationnel A3 et à une borne de la résistance R14.

La borne opposée de la résistance R14 est reliée à la borne de masse N1.

Les amplificateurs opérationnels A2 et A3 fonctionnent en rétroaction, chacun d'eux ayant sa sortie reliée à sa borne d'entrée inverseuse.

Les sorties des amplificateurs opérationnels A2 et A3 sont également reliées respectivement par les liaisons P3 et P4 au régulateur 12.

Le circuit de mise sous tension 50 comprend un transistor de puissance M1, un transistor bipolaire PNP T3, un transistor bipolaire NPN T4, des résistances R6, R7, R8, R9 et R10, une capacité C1 et une diode écrêteuse Z1.

La base du transistor T3 est reliée à la liaison A venant du détecteur de signaux de phases 40. Son émetteur est raccordé directement à borne S.

Le collecteur du transistor T3 est relié à la fois à une borne de la résistance R6, à une borne de la résistance R7 et à une borne de la capacité C1.

Les bornes opposées de la résistance R6 et de la capacité C1 sont reliées à la masse du dispositif d'adaptation 30.

La borne opposée de la résistance R7 est reliée à la base du transistor T4.

La base du transistor T4 est également reliée à une borne de la résistance R8, la borne opposée étant reliée à la borne CL.

L'émetteur du transistor T4 est relié à la masse du dispositif d'adaptation 30.

Le collecteur du transistor T4 est relié à une borne de la résistance R9. La borne opposée de la résistance R9 est reliée à la fois à une borne de la résistance R10, à l'anode de la diode écrêteuse Z1, ici du type Zener, et à la grille du transistor M1.

L'autre borne de la résistance R10 et la cathode de la diode Z1 sont reliées à la borne S.

La source du transistor M1 est reliée à la borne S et son drain est relié à la liaison C joignant le circuit de mise sous tension 50 au diviseur de tension 60.

Le diviseur de tension 60 comprend un Darlington T5, un transistor bipolaire NPN T6, des résistances R11, R12 et R15, une diode écrêteuse Z3 et un amplificateur opérationnel A1.

La liaison C est reliée à la fois à une borne de la résistance R11 et à une borne de la résistance R12.

La borne opposée de la résistance R12 est reliée à la fois à l'entrée non inverseuse de l'amplificateur opérationnel A1 et à une borne de la résistance R15. La borne opposée de la résistance R15 est reliée à la borne de masse N1.

La borne opposée de la résistance R11 est reliée à la fois à la base du Darlington T5 et à la cathode de la diode Z3. L'anode de la diode Z3 est reliée à la masse du dispositif d'adaptation 30.

Le collecteur du Darlington T5 est connecté à la borne B+A par la liaison H, et son émetteur est relié à la fois au collecteur du transistor T6 et aux bornes source d'énergie des amplificateurs opérationnels A1, A2 et A3.

L'émetteur du transistor T6 est relié à la fois à l'entrée inverseuse de l'amplificateur opérationnel A1, à une borne de la résistance RL et à la liaison D joignant le diviseur de tension 60 au dispositif de régulation 12.

Le circuit d'excitation 70 comprend un commutateur SW3, un transistor bipolaire PNP T7, un transistor bipolaire NPN T8, un transistor de puissance M2, des résistances R16, R17, R18, R19, R20, R21, et R22, une diode écrêteuse Z2 et une diode de roue libre Dex.

Une sortie d'excitation du régulateur 12 est reliée par la liaison F soit à une borne de la résistance R17 (sortie low side) soit à une borne de la résistance R18 (sortie high side) en fonction de la position du commutateur SW3.

La borne opposée de la résistance R18 est reliée à la fois à une borne de la résistance R19, à une borne de la résistance R20 et à la base du transistor T8.

La borne opposée de la résistance R19 est reliée à la borne de masse N2.

La borne opposée de la résistance R17 est reliée à la fois à une borne de la résistance R16 et à la base du transistor T7.

La borne opposée de la résistance R16 est reliée à la fois à l'émetteur du transistor T7 et à l'émetteur du transistor T6.

Le collecteur du transistor T7 est reliée à la borne opposée de la résistance R20.

L'émetteur du transistor T8 est relié à la borne de masse N2 et son collecteur à une borne de la résistance R21. La borne opposée de la résistance R21 est reliée à la fois à une borne de la résistance R22, à l'anode de la diode Z2 et à la grille du transistor M2.

La borne opposée de la résistance R22, la cathode de la diode Z2 et le collecteur du transistor M2 sont tous reliés à la borne B+A.

Le drain du transistor M2 est relié à la fois à la cathode de la diode Dex et à l'inducteur 22 par la liaison Ex.

L'anode de la diode Dex est reliée à la borne de masse N2.

On va maintenant expliquer le fonctionnement général du dispositif d'adaptation 30.

Quand l'alternateur 20 fonctionne, la différence de potentiel entre les sorties des premier et deuxième bobinages de phases dépasse le seuil prédéterminé mentionné plus haut. Dans ces conditions, l'un des deux transistors T1 ou T2 est toujours passant, et un signal est alors transmis par la liaison A au circuit de mise sous tension 50.

Le transistor T4 du circuit de mise sous tension 50 devient passant soit quand l'interrupteur à clé de contact 13 est fermé, soit quand le transistor T3 est passant. Ce transistor T3 est lui-même passant quand un signal est transmis par la liaison A.

La mise en conduction de T4 entraîne la mise en conduction de M1 qui envoie le potentiel de la liaison sense 16, soit 42 Volts nominalement, par la liaison C.

Le condensateur C1 permet de maintenir l'information de fonctionnement de l'alternateur 20 lors du changement de signe de la différence de potentiel entre les sorties des premier et deuxième bobinages de phases (basculement de T1 à T2 ou réciproquement).

La diode écrêteuse Z1 protège la grille du transistor M1.

Les potentiels de sortie des premier et deuxième bobinages de phases sont divisés par 3 par les ponts de résistances respectivement R3/R13 et R4/R14 avant d'être appliqués par les liaisons P3 et P4 aux entrées correspondantes du régulateur 12. Les amplificateurs opérationnels A2 et A3 utilisés en suiveur permettent d'obtenir une bonne adaptation d'impédance. L'amplitude des potentiels appliqués régulateur 12 est donc compatible avec les caractéristiques de ce régulateur 12.

Le potentiel de la liaison sense 16 est lui aussi divisé par 3 à 14 Volts nominalement par le pont de résistances R12/R15 et appliqué au régulateur 12 par l'amplificateur opérationnel A1 et le transistor T6, dont le rôle est le même que celui des amplificateurs A2 et A3.

Toute variation de la tension du réseau mesurée par la liaison sense 16 sera donc transmise au régulateur 12 avec une amplitude divisée par 3.

Le Darlington T5 et la résistance R11 ont pour rôle de fixer la source d'énergie des amplificateurs opérationnels A1, A2 et A3 à des valeurs compatibles avec la technologie de ces derniers, par exemple 30 Volts.

La résistance RL met le dispositif de régulation 12 en pré-excitation lorsque la liaison D est portée à 14 Volts environ. Cette fonction de pré-excitation existe sur la plupart des régulateurs existants dits « multifonctions ». Elle permet de magnétiser le circuit magnétique de l'alternateur 20 dès la fermeture de l'interrupteur à clé de contact 13 et avant la mise en rotation du moteur du véhicule.

Les régulateurs 12, en fonction de leur type, délivrant un signal dit high-side ou un signal dit low-side. Le transistor d'excitation du régulateur 12 dans le cas du signal low-side est relié à la masse, et dans le cas du signal high-side est relié au potentiel d'alimentation.

Dans le cas d'un signal low-side, le commutateur SW3 relie la sortie F du régulateur au transistor T7 via la résistance R17. Le transistor T7 inverse le signal d'excitation délivré par le régulateur 12.

Dans le cas d'un signal high-side, le commutateur SW3 relie la sortie F du régulateur au transistor T8 via la résistance R18.

Après amplification par T8, le signal d'excitation est appliqué au transistor de puissance M2 qui alimente sous 42 Volts environ l'inducteur 22. La diode Dex assure la continuité du courant d'excitation dans l'inducteur 22 pendant l'ouverture du transistor M2. La diode écrêteuse Z2 protège la grille du transistor M2.

Bien entendu ce système peut être adapté à un alternateur présentant plus de trois phases.

L'invention peut facilement être appliquées à des réseaux fonctionnant sous des tensions nominales différentes de 42 Volts, par exemple 28 Volts.

Elle peut également être appliquée avec des régulateurs de tension adaptés à des réseaux fonctionnant sous des tensions nominales différentes de 14 Volts, par exemple 28 Volts.

Il est important de noter que le dispositif d'adaptation de l'invention est compatible avec la plupart des régulateurs actuels sous 14 Volts : monofonction, multi fonctions, à charge progressive, ou autre.

## Revendications

1. Dispositif de régulation d'un réseau électrique, notamment de véhicule automobile, ce réseau fonctionnant sous une première tension nominale et comprenant un interrupteur à clé de contact (13), un alternateur (20) délivrant au moins des premier et deuxième courants de phases et équipé d'un redresseur (21) des courants de phases, et une batterie (10), **caractérisé en ce que** le dispositif de régulation (32) comprend un régulateur (12) adapté à une seconde tension nominale prédéterminée inférieure à la première tension nominale du réseau, et un dispositif d'adaptation (30) convertissant les valeurs des signaux du réseau en valeurs adaptées au régulateur (12).

2. Dispositif de régulation d'un réseau électrique suivant la revendication 1, **caractérisé en ce que** le dispositif d'adaptation (30) comprend un détecteur de fonctionnement de l'alternateur (40) muni de moyens pour comparer les potentiels de sortie des premier et deuxième bobinages de phases, les diviser d'un premier rapport prédéterminé et les transmettre au régulateur (12) .

3. Dispositif de régulation d'un réseau électrique suivant la revendication 2, **caractérisé en ce que** le dispositif d'adaptation (30) comprend un circuit de mise sous tension (50) muni de moyens pour transmettre la tension du réseau vers le régulateur (12) quand l'interrupteur à clé de contact (13) est fermé ou sur un signal du détecteur de fonctionnement de l'alternateur (40) .

4. Dispositif de régulation d'un réseau électrique suivant la revendication 3, **caractérisé en ce que** le dispositif d'adaptation (30) comprend un diviseur de tension (60) muni de moyens pour diviser du dit premier rapport prédéterminé la tension transmise par le circuit de mise sous tension (50) vers le régulateur (12).

5. Dispositif de régulation d'un réseau électrique suivant la revendication 3 ou 4, **caractérisé en ce que** le détecteur de fonctionnement de l'alternateur (40) transmet ledit signal au circuit de mise sous tension (50) quand la différence des potentiels de sortie entre les premier et deuxième bobinages de phases dépasse 0,5 Volt en valeur absolue.

6. Dispositif de régulation d'un réseau électrique suivant l'une quelconque des revendications 2 à 5, **caractérisé en ce que** ledit premier rapport prédéterminé est égal au rapport entre les seconde et première tensions nominales.

7. Dispositif de régulation d'un réseau électrique Réseau suivant l'une quelconque des revendications 3 à 5, **caractérisé en ce que** la dite tension du réseau transmise par le circuit de mise sous tension (50) vers le régulateur (12) est mesurée à la sortie du redresseur (21) .

8. Dispositif de régulation d'un réseau électrique suivant l'une quelconque des revendications 1 à 7, **caractérisé en ce que** le dispositif d'adaptation (30) comprend un circuit d'excitation (70) muni de moyens pour recevoir un signal d'excitation du régulateur (12), l'amplifier d'un second rapport prédéterminé et le transmettre à l'alternateur (20).

9. Dispositif de régulation d'un réseau électrique suivant la revendication 8, **caractérisé en ce que** ledit second rapport prédéterminé est égal au rapport entre les première et seconde tensions nominales.

10. Dispositif de régulation d'un réseau électrique suivant l'une quelconque des revendications 4 à 7, **caractérisé en ce qu'**un potentiel de masse est mesuré en sortie de l'alternateur (20) et transmis au régulateur (12), au détecteur de fonctionnement de l'alternateur (40) et au diviseur de tension (60).

11. Dispositif de régulation d'un réseau électrique suivant l'une quelconque des revendications 1 à 10, **caractérisé en ce que** la première tension nominale est égale à 28 Volts ou 42 Volts.

12. Dispositif de régulation d'un réseau électrique suivant l'une quelconque des revendications 1 à 11, **caractérisé en ce que** la seconde tension nominale est égale à 14 Volts.
